Europäisches Patentamt

(19) European Patent Office

Office européen des brevets

(11) Veröffentlichungsnummer: **0 249 045**
**B1**

(12) **EUROPÄISCHE PATENTSCHRIFT**

(45) Veröffentlichungstag der Patentschrift: **28.11.90**

(51) Int. Cl.⁵: **H 04 L 27/00, H 04 L 27/22**

(21) Anmeldenummer: **87106986.0**

(22) Anmeldetag: **14.05.87**

(54) **Verfahren zum Gewinnen eines Phasendifferenzsignals.**

(30) Priorität: **12.06.86 DE 3619744**

(43) Veröffentlichungstag der Anmeldung:
**16.12.87 Patentblatt 87/51**

(45) Bekanntmachung des Hinweises auf die
Patenterteilung:
**28.11.90 Patentblatt 90/48**

(84) Benannte Vertragsstaaten:
**DE FR GB IT NL SE**

(56) Entgegenhaltungen:
**EP-A-0 071 514**
**EP-A-0 079 576**
**EP-A-0 154 503**
**US-A-4 084 137**

**PATENT ABSTRACTS OF JAPAN, Band 10, Nr.
175 (E-413)2231r, 20. Juni 1986; & JP-A-61 24
354**

(73) Patentinhaber: **ANT Nachrichtentechnik GmbH
Gerberstrasse 33
D-7150 Backnang (DE)**

(72) Erfinder: **Hoffmann, Michael, Dr. rer. nat.
Zwischenäckerle 60
D-7150 Backnang (DE)**

Courier Press, Leamington Spa, England.

## Description

Verfahren zum Gewinnen eines Signals, das die Phasendifferenz zwischen einem lokalen Trägersignal und dem Träger eines amplituden- und/oder phasenumgetasteten Empfangssignals wiedergibt, nach dem das Empfangssignal in zwei von der Phasendifferenz abhängige, in Quadratur zueinander stehende, kartesisch orientierte Signalkomponenten zerlegt wird, wobei die beiden Signalkomponenten zusammen mehrere verschiedene Signalzustände darstellen.

Ein derartiges Verfahren ist z.B. aus einem Aufsatz von A. Leclert and P. Vandamme "Universal Carrier Recovery Loop for QASK and PSK Signal Sets" in IEE TRANSACTIONS ON COMMUNICATIONS, Vol. COM-31, No. 1, Jan. 1983, S. 130—136 bekannt, (siche auch EP—A—0 071 514), um ein Steuersignal für einen spannungsgesteuerten Oszillator zu gewinnen, der zur Trägerrückgewinnung in einer Demodulatorschaltung für amplituden und/oder phasenumgetastete (QASK) Signale eingesetzt ist. Ein nach dem bekannten Verfarhen erzeugtes Steuersignal, welches die Phasendifferenz zwischen zwei Trägersignalen wiedergibt, stellt fälschlicherweise manche Phasendifferenzen zu 0° dar, die tatsächlich aber weit von 0° abweichen.

Der Erfindung liegt die Aufgabe zugrunde, ein Verfahren der eingangs genannten Art anzugeben, womit ein Signal gewonnen werden kann, das eindeutig darüber informiert, wann die Phasendifferenz zwischen einem lokalen Trägersignal und einem QASK-Signal-Träger genau 0° oder einer dazu äquivalenten Phase (z.B. bei 64 QAM 0° + n90°, n ganzzahlig) beträgt.

Diese Aufgabe wird erfindungsgemäß durch die im Anspruch 1 oder im Anspruch 2 angegebenen kennzeichnenden Merkmale gelöst.

Zweckmäßige Ausführungen der Erfindung gehen aus den Unteransprüchen hervor.

Die Verfahren der Erfindung haben den Vorteil, daß sie mit wenig aufwendigen Schaltungen realisiert werden können, selbst wenn sie für höherstufige amplituden- und/oder phasenumgetastete Signale angewendet werden.

An Hand von in der Zeichnung dargestellten Ausführungsbeispielen wird anschließend die Erfindung näher erläutert. Es zeigen:

Fig. 1 ein Blockschaltbild eines QASK-Empfängers,

Fig. 2 ein Entscheidungsdiagramm für ein 16 QAM-System,

Fig. 3 eine Phasendetektorcharakteristik für ein 64-QAM-System,

Fig. 4 ein Blockschaltbild zur Ermittlung eines Phasendifferenzsignals,

Fig. 5 ein Entscheidungsdiagramm für ein 64-QAM-System,

Fig. 6 eine Phasendetektorcharakteristik für ein 64-QAM-System,

Fig. 7 ein zu Fig. 4 alternatives Blockschaltbild zur Ermittlung eines Phasendifferenzsignals und

Fig. 8 ein Blockschaltbild zur Bildung einer mittleren Phasendetektorcharakteristik.

Nachrichtentechnische Verfahren zur Informationsübertragung mittels amplituden- und/oder phasenumgetasteter Signale, abgekürzt auch QASK-Signale genannt, haben in den letzten Jahren zunehmend an Bedeutung gewonnen. QASK-Signale können bekanntlich folgendermaßen beschrieben werden:

$$u_1(t) = \hat{u}_1 \sum_k g(t-kT) \cdot \left\{ a_K \cos(\omega t + \phi) + b_K \sin(\omega t + \phi) \right\} \quad (1)$$

Hierbei sind cos(ωt + φ) die Normal- und sin(ωt + φ) die Quadraturkomponente des Signalträgers, und g(t) ist eine Funktion, welche folgende Bedingung erfüllt:

$$g(t) = \begin{cases} 1 & \text{für } t=0 \\ 0 & \text{für } t=nT, \text{ n ganzzahlig, } n \neq 0 \end{cases} \quad (2)$$

Die Wertepaare $(a_K, b_K)$ bei halten die zeit- und wertediskrete zu übertragende Information zu den Zeitpunkten t = kT (T: Taktdauer). Bei vorgegebenem m-stufigem übertragungsverfahren dürfen die Wertepaare nur m verschiedene Wertkombinationen annehmen. Von besonderer Bedeutung sind die m-stufigen Quadratur-Amplitudenmodulationsverfahren (QAM-Verfahren).

Aus der Literatur sind noch weitere QASK-Modulationsverfahren bekannt, zum Beispiel Kombinationen aus n-PSK/k-ASK (n + k = m) oder Kombination aus n-PSK/k-ASK (n + k m). Die weiteren Ausführungen treffen für alle QASK-Verfahren zu, werden aber vorwiegend anhand von QAM-Verfahren erläutert.

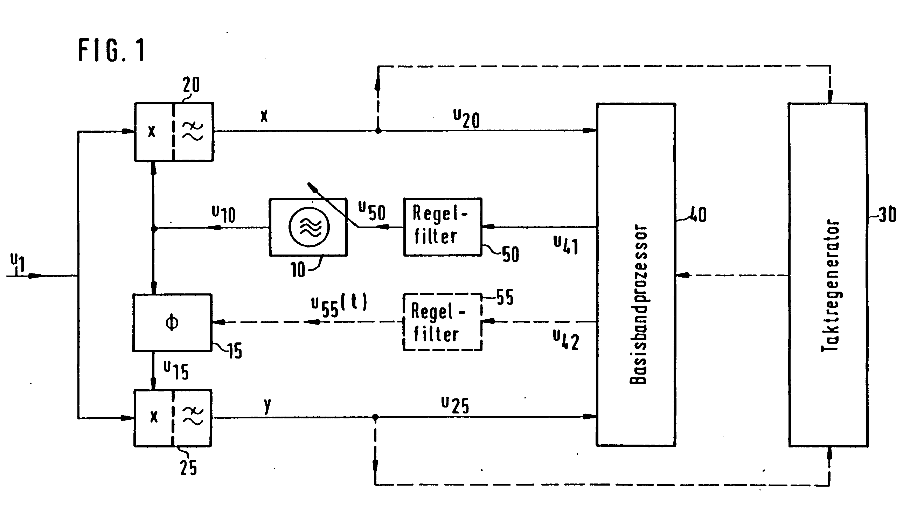

Das in Fig. 1 gezeigte Blockschaltbild gibt das bekannte Schaltungsprinzip eines Quadraturempfängers wieder, welcher zur Demodulation von QASK-Signalen geeignet ist. Ein spannungsgesteuerter Oszillator (VCO) 10 hat die Aufgabe, ein zum Träger des Eingangssignals $u_1(t)$ in phasenstarrer Relation stehendes Signal:

$$u_{10}(t) = \hat{u}_{10} \cdot \cos(\omega t + \vartheta + \psi) \qquad (3)$$

zu erzeugen.

Die Phase $\psi$ ist von dem aus einem Regelfilter 50 stammenden VCO-Steuersignal abhängig. Ein Phasenschieber 15 bildet aus dem Signal $u_{10}(t)$ das dazu um 90° verschobene Signal

$$u_{15}(t) = \hat{u}_{10} \cdot \sin(\omega t + \vartheta + \psi) \qquad (4)$$

Die Abwärtsmischer 20 bzw. 25 erzeugen aus dem Eingangssignal $u_1(t)$ und den Signalen $u_{10}(t)$ bzw. $u_{15}(t)$ die Signale

$$u_{20}(t) = A \cdot \sum_{K} g(t-kT) \cdot \left\{ a_K \cos\psi - b_K \sin\psi \right\} \qquad (5)$$

und

$$u_{25}(t) = A \cdot \sum_{k} g(t-kT) \cdot \left\{ a_K \sin\psi + b_K \cos\psi \right\} \qquad (6)$$

Die in $u_{20}(t)$ und $u_{25}(t)$ enthaltene Information über die Taktfrequenz 1/T und ihre Phasenlage kann in einem Taktregenerator 30 ausgenutzt werden, um ein Taktsignal phasenrichtig zu regenerieren. Eine Ausführung eines Taktregenerators geht z.B. aus einem Aufsatz von Le-Ngoc, Tho; Feher, Kamilo: A Digital Approach to Symbol Timing Recovery Systems in IEEE Trans. Com., vol. COM-28, no. 12, Dec. 1980, pp. 1993—1999 hervor.

Das regenerierte Taktsignal benutzt man, um die Signale $u_{20}(t)$ und $u_{25}(t)$ in den Zeitpunkten t = kT abzutasten. Diese Aufgabe wird neben anderen in einem Basisbandprozessor 40 ausgeführt. Es gilt für die beiden in Quadratur zueinander stehenden Basisbandsignalkomponenten:

$$x := u_{20}(kT) = A \cdot (a_K \cos\psi - b_K \sin\psi) \qquad (7)$$

$$y := u_{25}(kT) = A \cdot (a_K \sin\psi + b_K \cos\psi) \qquad (8)$$

Fur $\psi = 0$ geben die beiden Signalkomponenten x und y die demodulierte Information $a_K$, $b_K$ wieder. Eine wesentliche Aufgabe der Demodulatorschaltung ist somit die Regelung der Phase $\psi$ auf 0. Da bei $\psi = 0$ das lokal erzeugte Signal $u_{10}(t)$ bis auf einen Amplitudenfaktor mit der einen Trägerkomponente des Eingangssignals $u_1(t)$ identisch ist, ist $u_{10}(t)$ das lokal regenerierte Trägersignal.

Das Ausgangssignal $u_{41}(t)$ des unten detailliert beschriebenen Basisbandprozessors 40, welches eine Funktion der Phasendifferenz zwischen dem Träger des empfangenen Eingangssignals $u_1(t)$ und dem im spannungsgesteuerten Oszillator 10 erzeugten lokalen Trägersignal $u_{10}(t)$ ist, wird in der Schaltung gemäß Fig. 1 in einem Regelfilter 50 gefiltert. Dessen Ausgangssignal $u_{50}(t)$ ist das Steuersignal für den spannungsgesteuerten Oszillator (VCO) 10.

Die Abwärtsmischer 20, 25, der Basisbandprozessor 40, das Regelfilter 50, der VCO 10 und der Phasenschieber 15 gemäß Fig. 1 bilden die Regelschleife zur lokalen Regeneration des Trägers des Eingangssignals $u_1(t)$. Gleichzeitig bilden die Blöcke 20, 25, 10 und 15 den Quadraturempfänger.

Für eine korrekte Demodulation ist es wesentlich, daß die lokal regenierten Trägerkomponenten $u_{10}(t)$ und $u_{15}(t)$ um 90° gegeneinander phasenverschoben sind. In der Praxis können jedoch kleine Abweichungen von der 90°-Phasendifferenz vorhanden sein. Dann gilt statt der Gln. (3), (4):

$$u_{10}(t) = \hat{u}_{10} \cos(\omega t + \vartheta + \psi) \qquad (9)$$

$$u_{15}(t) = \hat{u}_{10} \sin(\omega t + \vartheta + \psi + \delta) \qquad (10)$$

Damit ändern sich die Gln. (7), (8) in

$$x = A \cdot \left\{ a_K \cos\psi - b_K \sin\psi \right\} \qquad (11)$$

$$y = A \cdot \left\{ a_K \sin(\psi + \delta) + b_K \cos(\psi + \delta) \right\} \qquad (12)$$

Aus diesen Gleichungen folgt sofort, daß für eine optimale Demodulation $\psi = \delta = 0°$ anzustreben ist.

Neben der Trägerregenerationsschleife, welche die Phasendifferenz ψ minimiert, bietet sich daher auch eine zweite Regelschleife zur Minimierung von δ an.

Zu diesem Zweck kann der Phasenschieber 15 in der Schaltung gemäß Fig. 1 so aufgebaut werden, daß ein Feinabgleich der Phasenverschiebung über ein Steuersignal möglich wird. Die Gewinnung der zusätzlichen Regelinformation $u_{42}(t)$, die hierfür benötig wird, kann ebenfalls im Basisbandprozessor 40 gewonnen werden.

In dem Blockschaltbild der Fig. 1 wird das Regelsignal $u_{42}(t)$, das eine Funktion der Phasendifferenz δ zwischen den Trägersignalkomponenten $u_{10}(t)$ und $u_{15}(t)$ ist und in ähnlicher Weiser ermittelt wird wie das Signal $u_{41}(t)$, auf ein Regelfilter 55 geschaltet, dessen Ausgangssignal $u_{55}(t)$ auf den Steuereingang des Phasenschiebers 15 geführt wird.

Die Abwärtsmischer 20, 25, der Basisbandprozessor 40, das Regelfilter 55, der Lokaloszillator 10 und der Phasenschieber 15 bilden den Regelkreis zur Nachführung der Phasendifferenz δ auf den Wert 0°.

Im folgenden soll nun ein neues vom Basisbandprozessor durchzuführendes Verfahren beschrieben werden, mit dem ein von der Phasendifferenz zwischen dem lokalen Trägersignal und dem Träger des Empfangssignals abhängiges Signal gebildet werden kann, das eindeutig nur dann zu Null wird, wenn auch tatsächlich die Phasendifferenz 0° oder einer dazu äquivalenten Phase beträgt.

Im Quadraturempfänger der Fig. 1 werden die Normal- und die Quadraturkomponente x und y der komplexen Hüllkurve des empfangenen Signals $u_1(t)$ gebildet. Der Quadraturempfänger erzeugt somit zwei kartesisch orientierte Signalkomponenten x, y.

In einem ersten Verfahrensschritt gemäß der Erfindung werden nun die kartesisch orienterten Signalkomponenten x und y in zwei polar orientierte Signalkomponenten

$$R = \sqrt{x^2 + y^2} \qquad\qquad (13)$$

$$\alpha = \begin{cases} \arctan(y/x) & , \text{ falls } x \geq 0 \\ \arctan(y/x) + \pi & , \text{ falls } x < 0 \end{cases}$$

transformiert, wobei die polare Signalkomponente R die Amplitude eines durch die beiden kartesisch orientierten Signalkomponenten x und y gebildeten Signalzustandsvektors und die andere polare Signalkomponente α den Phasenwinkel zu diesem Signalzustandsvektor darstellt. Mit den Gleichungen (7) und (8) folgt für die polaren Signalkomponenten R und α:

$$R = \sqrt{a_K^2 + b_K^2} \qquad\qquad (14)$$

$$\alpha = \begin{cases} \psi + \arctan(b_K/a_K) & , \text{ falls } x \geq 0 \\ \psi + \arctan(b_K/a_K) + \pi & , \text{ falls } x < 0 \end{cases} \qquad (15)$$

Mit Hilfe eines Schwellwertentscheiders kann man auch dann noch die korrekte Amplitude des gesendeten Signalzustands $(a_K, b_K)$ aus R bestimmten, wenn die Signalkomponente x und y durch Rauschen oder durch Verschiebung des Abtastzeitpunktes gegenüber kT leicht verfälscht sind.

Zur Bestimmung der Entscheiderausgangssignalwerte, einer für die Dimensionierung des Schwellwertentscheiders wesentlichen Grundlage, geht man wie folgt vor. Man bestimmt zu allen erlaubten Sendesignalzuständen $(a_K, b_K)$ die Amplitudenwerte $R = \sqrt{a_K^2 + b_K^2}$ und ordnet sie der Größe nach. Man erhält so r verschiedene Werte $R_i$, die "Nominalamplituden", mit

$$0 \leq R_1 < \ldots < R_i < \ldots < R_r.$$

Der Schwellwertenscheider für die Amplitude muß dann genau diese r Ausgangswerte erzeugen können. Die Entscheidungsschwellen $\tilde{R}_i$ werden wie folgt festgelegt:

$$0 = \tilde{R}_0 \leq R_1 < \tilde{R}_1 < R_2 < \tilde{R}_2 \ldots < \tilde{R}_{r-1} < R_r < \tilde{R}_r.$$

Innerhalb dieser Anordnung ist die Wahl der Schwellwerte $\tilde{R}_i$ noch weitgehend flexibel. Einem zu quantisierenden Wert R wird dann der entschiedene Wert $\hat{R} = R_i$ zugeordnet, wenn gilt:

$$\tilde{R}_{i-1} < R < \tilde{R}_i.$$

Eine empfehlenswerte Lage der Schwellen wird dadurch gekennzeichnet, daß man die Wahrscheinlichkeiten, R im Intervall $(\tilde{R}_i, \tilde{R}_{i-1})$ aufzufinden, wenn alle möglichen Signalzustände mit

Amplitudenwert $R_i$ gesendet wurden, für alle i gleichsetzt. Eine andere, einfachere Möglichkeit zur Schwellendefinition ist beispielsweise durch $\tilde{R}_i = (R_i + R_{i+1})/2$ für i = 1, . . ., r − 1 gegeben.

Nachdem der Amplitudenwert R des empfangenen Signals durch den Schwellwertenscheider zu $\hat{R}$ entschieden wurde, verbleibt das Problem, aus dem aus den kartesisch orientierten Signalkomponenten x, y bestimmten Phasenwinkel α den wahrscheinlichsten gesendeten Phasenwinkel $\hat{\alpha}$ zu bestimmen.

Die Problematik soll anhand eines Beispiels mit 16QAM-Signalen näher erläutert werden. Tab. 1 gibt den Zusammenhang zwischen der kartesischen Darstellung $(a_K, b_K)$ und der Polarkoordinatendarstellung (R, α) der erlaubten Sendesignalzustände wieder.

**Tabelle 1**

| $a_K$ | $b_K$ | $\alpha$[rad] | $\alpha$[grad] | $R^2$ |
|---|---|---|---|---|
| +1 | +1 | arctan( 1 ) | 45.0 | 2 |
| +1 | +3 | arctan( 3 ) | 71.6 | 10 |
| +3 | +1 | arctan(1/3) | 18.4 | 10 |
| +3 | +3 | arctan( 1 ) | 45.0 | 18 |
| −1 | +1 | −arctan( 1 ) | 135.0 | 2 |
| −1 | +3 | −arctan( 3 ) | 108.4 | 10 |
| −3 | +1 | −arctan(1/3) | 161.6 | 10 |
| −3 | +3 | −arctan( 1 ) | 135.0 | 18 |
| −1 | −1 | +arctan( 1 ) | 225.0 | 2 |
| −1 | −3 | +arctan( 3 ) | 251.6 | 10 |
| −3 | −1 | +arctan(1/3) | 189.4 | 10 |
| −3 | −3 | +arctan( 1 ) | 225.0 | 18 |
| +1 | −1 | −arctan( 1 ) | −45.0 | 2 |
| +1 | −3 | −arctan( 3 ) | −71.6 | 10 |
| +3 | −1 | −arctan(1/3) | −18.4 | 10 |
| +3 | −3 | −arctan( 1 ) | −45.0 | 18 |

Angenommen, der Signalzustand $(a_K, b_K)$ = (3, 3) werde gesendet. Der Träger des Lokaloszillators sei gegenüber dem Empfangssignalträger um ψ = 25° phasenverschoben. Infolgedessen entstehen gemäß Gln. (7), (8) und mit A = 1 folgende Signale:

$$x = 3 \ (\cos 25° − \sin 25°) = 1.45$$

$$y = 3 \ (\sin 25° + \cos 25°) = 3.99.$$

daher sind

$R = \sqrt{18}$ und α = 70°.

Der Schwellwertenscheider für den Amplitudenwert R wird dann korrekt den entschiedenen Wert R = $\sqrt{18}$ liefern. Aus Tabelle 1 entnimmt man, daß der am nächsten zu α = 70° gelegene Winkel, der von einem der Sendezustände eingenommen werden kann, 71.6° ist. Eine von R unabhängig Entscheidung von α würde also α = 71.6° erbringen. Tatsächlich gibt es aber bei (R, α) = ($\sqrt{18}$, 71.6°) keinen Signalzustand.

Die Entscheidung auf den Phasenwinkel darf somit nicht unabhängig von R vorgenommen werden.

Bei R = $\sqrt{18}$ liegen nach Tabelle 1 Signalzustände mit den Winkeln −45°, 45°, 135° und 225° vor. Unter der Annahme, daß $\hat{R}$ der korrekte Amplitudenwert ist, sollte der Schwellwertentscheider für den Phasenwinkel α daher auf den Wert α = 45° entscheiden, da dieser Wert von den vier bei $\hat{R}$ = $\sqrt{18}$ möglichen der zu α nächstliegende ist.

Die Entscheidung für die polaren Signalkomponenten $(\hat{R}, α)$ = ($\sqrt{18}$, 45°), das entspricht den kartesischen Signalkomponenten (x, y) = (3, 3), erweist sich unter den genannten Randbedingungen als korrekt.

Für die Bestimmung der Signalausgangswerte des Phasenwinkelentscheiders ist daher wie folgt vorzugehen: Zu allen erlaubten Sendesignalzuständen $(a_K, b_K)$ mit Amplitudenwert $R_i$ bestimmt man die Phasenwinkel und ordnet sie der Größe nach. Man erhält so $q_i$ verschiedene Phasenwinkelwerte mit

$$-\pi/2 \leq \alpha_{i,1} < . . . < \alpha_{i,j} < . . . < \alpha_{i,q_i}.$$

5

Der Phasenwinkelentscheider muß dann bei $\hat{R} = R_i$ genau diese $q_i$ Ausganswerte erzeugen können. Die Entscheidungsschwellen $\bar{a}_{i,j}$ werden wie folgt festgelegt:

$$\bar{a}_{i,0} < \bar{a}_{i,1} < \bar{a}_{i,1} < \bar{a}_{i,2} < \ldots < \bar{a}_{i,q_{i-1}} < \bar{a}_{i,q_i} < \bar{a}_{i,0} + 2\pi = \bar{a}_{i,q_i}.$$

Innerhalb dieser Anordnung ist die Wahl der Schwellwerte $\bar{a}_{i,j}$ noch weitgehend flexibel. Einem zu entscheidenen Wert $a$ wird dann der entschiedene Wert $\hat{a} = a_{i,j}$ zugeordnet, wenn gilt: $R_{=i-1} < R < \bar{R}_i$ und $\bar{a}_{i,j-1} < a < \bar{a}_{i,j}$.

Eine empfehlenswerte Lage der Schwellen $\bar{a}_{i,j}$ wird dadurch errechnet, daß man die Wahrscheinlichkeiten, $a$ im Intervall $(\bar{a}_{i,j}, \bar{a}_{i,j-1})$ aufzufinden, wenn der Signalzustand mit $R = R_i$ und $a = a_{i,j}$ gesendet wurde, bei festem $i$ für alle $j$ gleichsetzt. Eine andere Möglichkeit zur Schwellendefinition ist beispielsweise durch

$\bar{a}_{i,j} = (a_{i,j} + a_{k,j+1})/2$ für $j = 1, \ldots, q_{i-1}$; $\bar{a}_{i,qi} = (a_{i,q_i} + a_{i,1} + 2\pi)/2$ gegeben.

Wie das vorangegangene Beispiel bei 16 QAM zeigte, wird durch einen solchen Phasenwinkelentscheider bei hinreichend kleiner Phasenverschiebung zwischen dem Eingangssignal-Träger und dem Trägersignal des Lokaloszillators der entschiedene Wert

$$\hat{\alpha} = \begin{cases} \arctan(b_K/a_K) & , \text{falls } x \geq 0 \\ \arctan(b_K/a_K) + \pi & , \text{falls } x < 0 \end{cases} \tag{16}$$

entscheiden. Aus Gleichung (15) folgt dann mit Gleichung (16)

$$\alpha - \hat{\alpha} = \psi \;. \tag{17}$$

Die Differenz gemäß Gleichung (17) zwischen dem Winkel $a$ eines empfangenen Signalzustandes und dem durch Schwellwertentscheidung entschiedenen Winkel $\hat{a}$ des am wahrscheinlichsten gesendeten Signalzustandes gibt Auskunft über die Phasendifferenz $\psi$ zwischen dem Träger des Empfangssignals und dem Lokaloszillatorträger. Dieses die Phasendifferenz wiedergebende Differenzsignal, im folgenden als Phasendetektorfunktion

$$\varepsilon_1(\psi, \hat{R}) = a - \hat{a} \tag{18}$$

bezeichnet, kann direkt für die Nachregelung der Lokaloszillatorphase verwendet werden. Die Funktion $\varepsilon_1$ ist neben $\psi$ auch vom entschiedenen Amplitudenwert $\hat{R}$ abhängig, da der entschieden Winkel $\hat{a}$ von R abhängt.

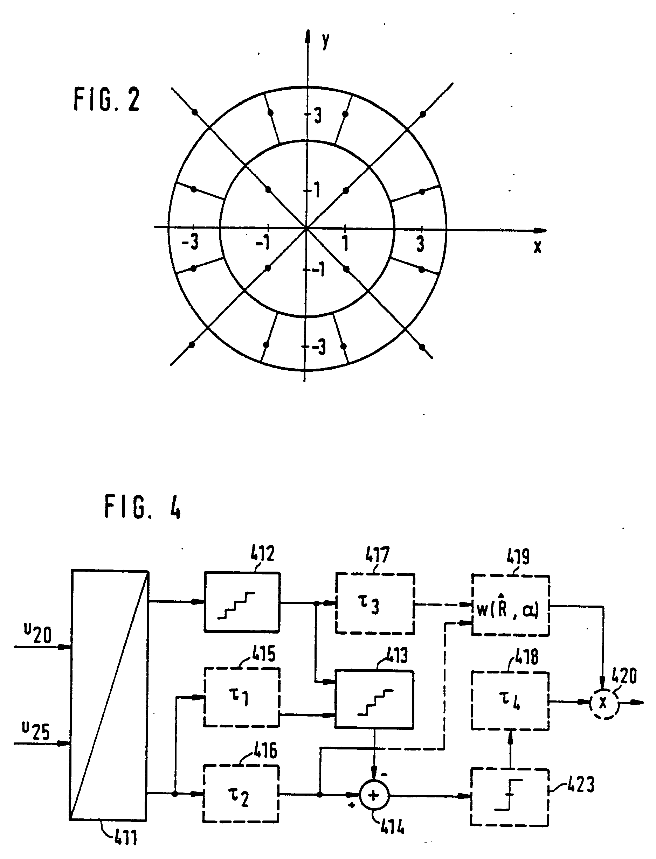

Die Fig. 2 zeigt ein Entscheidungsdiagramm für ein 16QAM moduliertes Signal, wobei die Punkte die möglichen Signalzustände bei ideal regeniertem Träger kennzeichnen, die konzentrischen Kreise die Schwellen für die Amplitudenwertentscheidung und die durch den Nullpunkt des Koordinatensystems verlaufenden Geraden die Schwellen für die Winkelentscheidung darstellen. Die Entscheidungsschwellen sind durch arithmetische Mittlung benachbarter entschiedener Werte $\hat{R}$ und $\hat{a}$ gebildet worden.

Zu jedem durch die Kreise abgegrenzten Entscheidungsgebiet läßt sich eine Einzelphasendetektorfunktion $\varepsilon_1(\psi, R_i) = \varepsilon_1(\psi, \hat{R})_{\hat{R}=R_i}$, die innerhalb des Gebiets nicht mehr von der Amplitude R des Empfangssignals abhängt.

Die gleichen Entscheidungsgebiete wie bei der Phasendetektorfunktion $\varepsilon_1(\psi, \hat{R}) = a - \hat{a}$ findet man auch für die folgenden abgewandelten Einzelphasendetektorfunktionen:

$$\varepsilon_2(\psi, \hat{R}) : = \text{sgn}(\alpha - \hat{\alpha}) \tag{19}$$

$$\varepsilon_3(\psi, \hat{R}) : = w(\hat{R}, \alpha) \cdot (\alpha - \hat{\alpha}) \tag{20}$$

$$\varepsilon_4(\psi, \hat{R}) : = w(\hat{R}, \alpha) \cdot \text{sgn}(\alpha - \hat{\alpha}) \tag{21}$$

Dabei ist $w(\hat{R}, a)$ eine nichtnegative Funktion des entschiedenen Amplitudenwertes $\hat{R}$ und des Phasenwinkels $a$. $w(\hat{R}, a)$ wird im folgenden Wichtungsfunktion genannt. Durch $w(\hat{R}, a)$ ist es möglich, einige Einzelphasendetektorfunktionen gegenüber anderen hervorzuheben. Das Zustandsdiagramm in Fig. 2 läßt erkennen, daß es einige Amplitudenbereiche gibt, bei denen eine Winkelfehlentscheidung weniger wahrscheinlich ist, als in anderen. Das sind die Amplitudenbereiche $R_i$, in denen nur wenige Signalzustände liegen. Ist dann $w(R_i, a)$ für diese Amplitudenbereiche im Mittel über die Winkel $a_{i,j}$ größer als bei den restlichen Amplitudenbereichen, so wird eine über alle m Einzelphasendetektorfunktionen (m = Zahl der möglichen Signalzustände) bezüglich R gemittelte Phasendetektorcharakteristik $g(\psi) = <\varepsilon \psi, \hat{R}>_{\hat{R}}$ stärker von den durch $w(\hat{R}, a)$ hervorgehobenen Einzelphasendetektorfunktion beeinflußt.

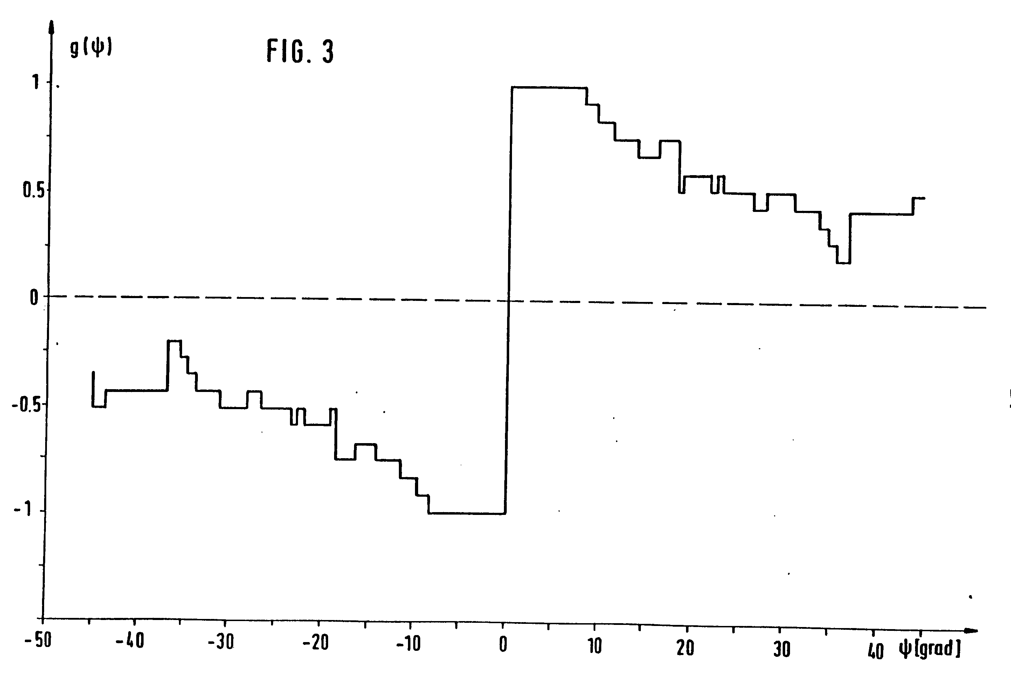

Als Beispiel sei die Anwendung der Gleichung (21) $\varepsilon_4 (\psi, \hat{R})$ auf 64QAM-Signale betrachtet. Hier sind bei den Amplituden $R_1 = \sqrt{2}$ $R_3 = \sqrt{18}$ und $R_9 = \sqrt{98}$ jeweils nur 4 verschiedene Winkelwerte $a_{i,q_i}$ vorhanden, auf die entschieden werden kann. Wählt man beispielsweise $w(\hat{R}, a) = 4$ für $\hat{R} = R_1, R_3$ oder $R_9$ und $w(\hat{R}, a) = 1$ sonst, so erhält man eine mittlere Phasendetektorcharakteristik $g(\psi) = <\varepsilon_4(\psi, \hat{R})>_{\hat{R}}$ wie sie in Fig. 3 dargestellt ist. In diesem Beispiel wurden als Entscheiderschwellen jeweils die arithmetischen Mittel benachbarter Amplitudenwerte $R_i$ bzw. Winkelwerte $a_{i,j}$ gewählt. Die Phasendetektorcharakteristik ist auf Maximalamplitude 1 normiert worden.

Eine Synchronisation des spannungsgesteuerten Oszillators VCO auf den Träger Empfangssignals erfolgt für Phasendifferenzen $\psi = \psi_s$, für die gilt $g(\psi_s) = 0$ und $dg/d\psi > 0$. Wie oben ausgeführt, sollte eine Synchronisation nur für die Phasendifferenz $\psi = \psi_s = 0°$ erfolgen. Wird $g(\psi s) = 0$ innerhalb eines Intervalls $(-45°, +45°)$ auch für $\psi = \psi_s \ne 0°$, so kommt es zu Fehlsynchronisationen. Fehlsynchronisationen verursacht aber ein Steuersignal, das gemäß einem aus der eingangs erwähnten IEEE TRANSACTIONS ON COMMUNICATIONS, Vo. COM-31, No. 1, Jan. 1983, S. 130—136 bekannten Verfahren gebildet wird, denn hier weist die Phasendetektorcharakteristik mehrere Phasendifferenz $\psi_s$ auf, für die $g(\psi_s) = 0$ ist. Solche Fehlsynchronisationspunkte gibt es bei der Phasendetektorcharakteristik des Anmeldungsgegenstandes nicht, wie der Fig. 3 zu entnehmen ist. Hier ist ausschließlich im interessierenden Bereich $-45° < \psi < 45°$ nur bei $\psi = 0°$ $g(\psi) = 0$.

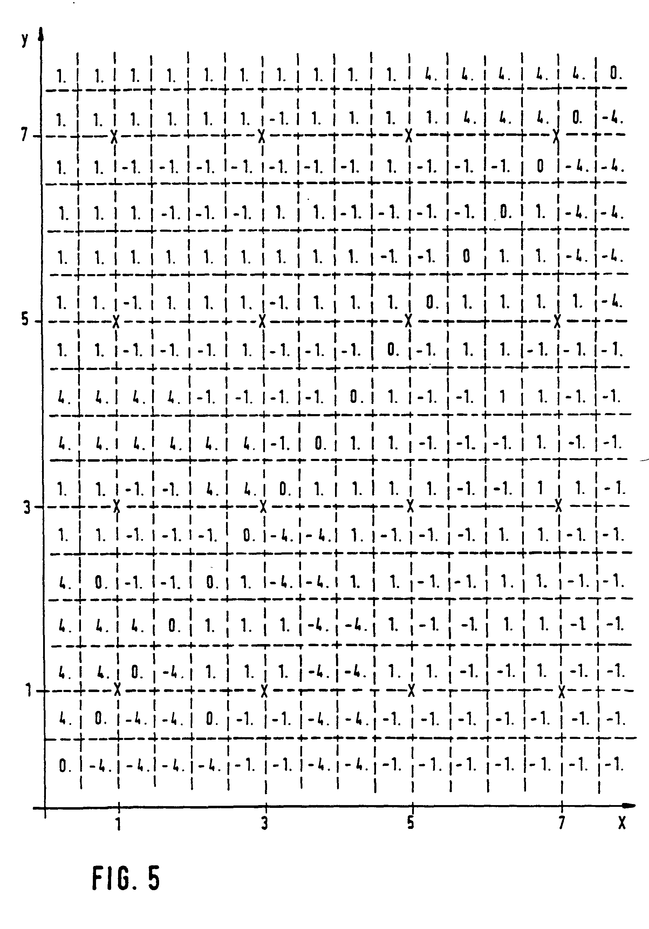

In Fig. 4 ist ein Blockschaltbild zur Durchführung des vorangehend beschriebenen Verfahrens angegeben.

Von einem Koordinatenumsetzer 411, wie er z.B. aus Analog Devices, Data Sheet and Application Notes AD639, AD637, AD630, Norwood, Mass., USA, 6. 1985 bekannt ist, werden die kartesischen Signalkomponenten x und y in die polaren Signalkomponenten R und a transformiert. Das zur Amplitude R proportionale Ausgangssignal des Koordinatenumsetzters 411 wird auf einen ersten Schwellwertentscheider 412 zur Bildung des Signals $\hat{R}$ gegeben. Das zum Phasenwinkel a proportionale Ausgangssignal des Koordinatenumsetzer 411 wird über einen Verzögerungsblock 415 einem zweiten Schwellwertentscheider 413 zugeführt, der das Signal $\hat{a}$ ausgibt. Wie die entschiedenen Werte $\hat{R}$ und $\hat{a}$ gebildet werden, ist oben beschrieben worden. Ein zweiter Eingang des zweiten Schwellwertentscheiders 413 ist mit dem Ausgang des ersten Schwellwertenscheiders 412 beschaltet, um den Entscheidungsvorgang im Block 413 von dem bereits entschiedenen Amplitudenwert R abhängig machen zu können. Das Ausgangssignal des Koordinatenumsetzers 411 wird außerdem noch über einen Vorzögerungsblock 416 auf ein Summierglied 414 geschaltet. Der zweite vorzeicheninvertierende Eingang des Summierers 414 ist mit dem Ausgang des zweiten Schwellwertentscheiders 413 verbunden. Am Ausgang des Summierers 414 steht dann ein zu der Phasenwinkeldiffernz a − $\hat{a}$ proportionales Signal zur Verfügung.

Sofern eine der Funktionen $\varepsilon_2(\psi, \hat{R})$ nach Gleichung (19) oder $\varepsilon_4(\psi, \hat{R})$ nach Gleichung (21) realisiert werden soll, wird der Ausgang des Summierers 414 auf einen harten Begrenzer 423 zur Bildung der Signumsfunktion sgn(a − $\hat{a}$) geschaltet. In den Fällen, in denen die Funktion $\varepsilon(\psi, \hat{R})$ nach Gleichung (20) oder $\varepsilon_1(\psi, \hat{R})$ nach Gleichung (18) gebildet werden soll, wird der Schaltblock 423 durch einen Kurzschluß ersetzt.

Zur Bildung der Funktion $\varepsilon_3(\psi, R) = w(\hat{R}, a) \cdot (a - \hat{a})$ oder $\varepsilon_4(\psi, \hat{R}) = w(\hat{R}, a) \cdot$ sgn(a − $\hat{a}$) wird das Ausgangssignal R des Koordinatenumsetzers 411 über einen Verzögerungsblock 417 auf einen ersten Eingang eines die Wichtungsfunktion $w(\hat{R}, a)$ generienden Blocks 419 gegeben. Wenn $w(\hat{R}, a)$ explizit von a des abhängt, wird auf einen zweiten Eingang des Schaltblocks 419 das Ausgangssignal a des Koordinatenumsetzers 411 geschaltet. Das Ausgangssignal des Schaltblocks 419 und das über einen Vorzögerungsblock 418 geführte Signal a − $\hat{a}$ oder sgn(a − $\hat{a}$) werden dann in einem Multiplexer 420 multipliziert. Am Ausgang der Multiplexers 420 steht dann ein Signal an, welches der Funktion $\varepsilon_3(\psi, R) = w(\hat{R}, a) \cdot (a - \hat{a})$ oder der Funktion $\varepsilon_4(\psi, \hat{R}) = w(\hat{R}, a) \cdot$ sgn(a − $\hat{a}$) proportional ist.

Die Verzögerungsglieder 415 bis 418 können dann entfallen, wenn die Verarbeitungsgeschwindigkeit in den Blöcken 412, 413, 414, 423 und 419 im Vergleich zur Taktschrittdauer T hinreichend groß ist.

Im folgenden wird eine Abwandlung des zuvor beschriebenen Verfahrens angegeben. Hier wird eine Approximierung der kartesischen Signalkomponenten x und y durch quantisierte Signalkomponenten $\hat{x}$ und $\hat{y}$ vorgenommen. Aus den quantisierten kartesischen Signalkomponenten $\hat{x}$ und $\hat{y}$ entsteht die quantisierte polare Signalkomponente:

$$\hat{a} := \begin{cases} \arctan(\hat{y}/\hat{x}) & , \text{ falls } \hat{x} \ge 0 \\ \arctan(\hat{y}/\hat{x}) + \pi & , \text{ falls } \hat{x} < 0 \end{cases} \qquad (22)$$

Damit erhält man als Näherungen für die Einzelphasendetektorfunktionen $\varepsilon_2(\psi, \hat{R})$ bzw. $\varepsilon_4(\psi, \hat{R})$:

7

$$\mathcal{E}_5(\psi, \hat{R}) := sgn(\hat{\hat{\alpha}}-\hat{\alpha}) \qquad\qquad bzw. \qquad\qquad (23)$$

$$\mathcal{E}_6(\psi, \hat{R}) := w(\hat{R}, \hat{\hat{\alpha}}) \cdot sgn(\hat{\hat{\alpha}}-\hat{\alpha}) \qquad\qquad (24)$$

Die Bestimmung von $\hat{\alpha}$ und $\hat{R}$ aus $\hat{x}$, $\hat{y}$ erfolgt im Prinzip genau wie oben beschrieben, nur daß zur $\hat{R}$- und $\hat{\alpha}$-Entscheidung nun das Signalpaar $(\hat{x}, \hat{y})$ statt (x, y) ansteht.

Es existiert nur eine bestimmte Anzahl von Paaren $(\hat{x}, \hat{y})$, welche von der Anzahl der Quantisierungsstufen für x und y abhängt. Für die Bildung von $\hat{R}$ und $\hat{\alpha}$ ist daher keine Quantisierung oder Entscheidung mehr nötig, sondern nur noch eine Verknüpfung, welche jedem Signalpaar $(\hat{x}, \hat{y})$ ein bestimmtes Ausgangssignalpaar $(\hat{R}, \hat{\alpha})$ zuordnet. Daraus kann dann in einfacher Weise ein Entscheidungsdiagramm gebildet werden.

Ein aus der Einzelphasendetektorfunktion $\varepsilon_6(\psi, \hat{R}) = w(\hat{R}, \hat{\alpha})sgn(\hat{\hat{\alpha}} - \hat{\alpha})$ abgeleitetes Entscheidungsdiagramm für ein 64QAM-Signal ist in der Fig. 5 dargestellt.

Die Signalkomponenten x und y werden in diesem Beispiel auf je 32 Stufen entschieden. Die Wichtungsfunktion $w(\hat{R}, \hat{\alpha})$ wurde für dieses Beispiel so gewählt, daß bei $\hat{R} = R_1 = \sqrt{2}$, $\hat{R} = R_3 = \sqrt{18}$ und $\hat{R} = R_9 = \sqrt{98}$ $w(\hat{R}, \hat{\alpha}) = 4$ und sonst $w(\hat{R}, \hat{\alpha}) = 1$ gilt. Wegen der Rotationssymmetrie des Entscheidungsdiagramms ist in Fig. 5 nur der 1. Quadrant dargestellt worden.

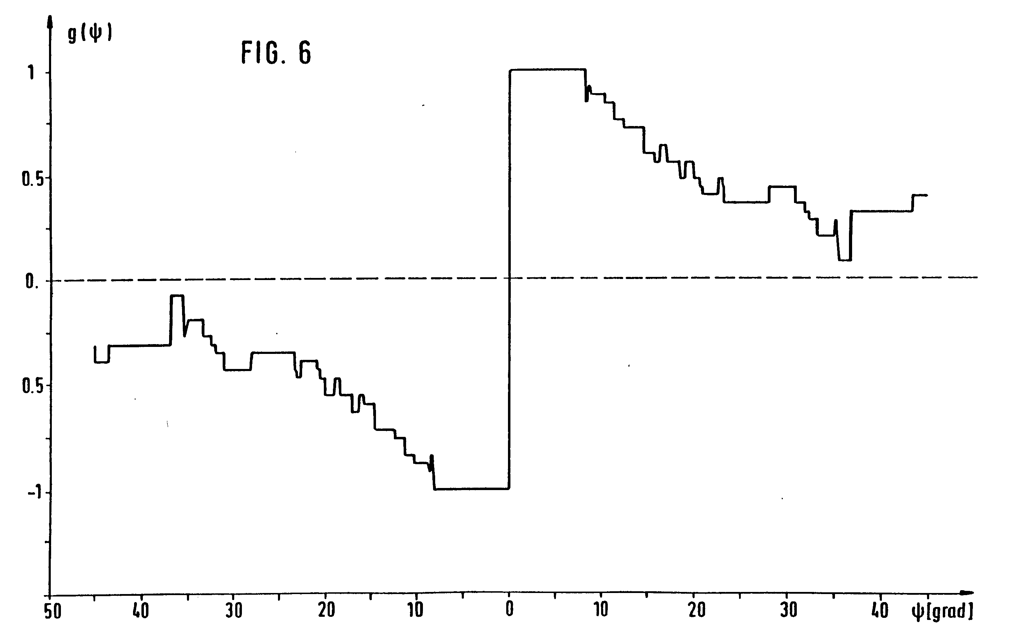

In Fig. 6 ist die für dieses Beispiel geltende mittlere Phasendetektorcharakteristik $g(\psi) = <\varepsilon_6(\psi, \hat{R})>_{\hat{R}}$ dargestellt, wenn vorausgesetzt wird, daß alle Signalzustände mit gleicher Häufigkeit auftreten. Man erkennt, daß innerhalb des Intervalls (−45°, +45°) keine Fehlsynchronisationspunkte existieren, denn eindeutig nur für $\psi = 0°$ ist $g(\psi) = 0$.

Die Einzelphasendetektorfunktion $\varepsilon_5(\psi, \hat{R})$ und $\varepsilon_6(\psi, \hat{R})$, im folgenden kurz als $\varepsilon(\psi, \hat{R})$ bezeichnet, lassen sich nach einem besonders einfachen Verfahren bestimmen.

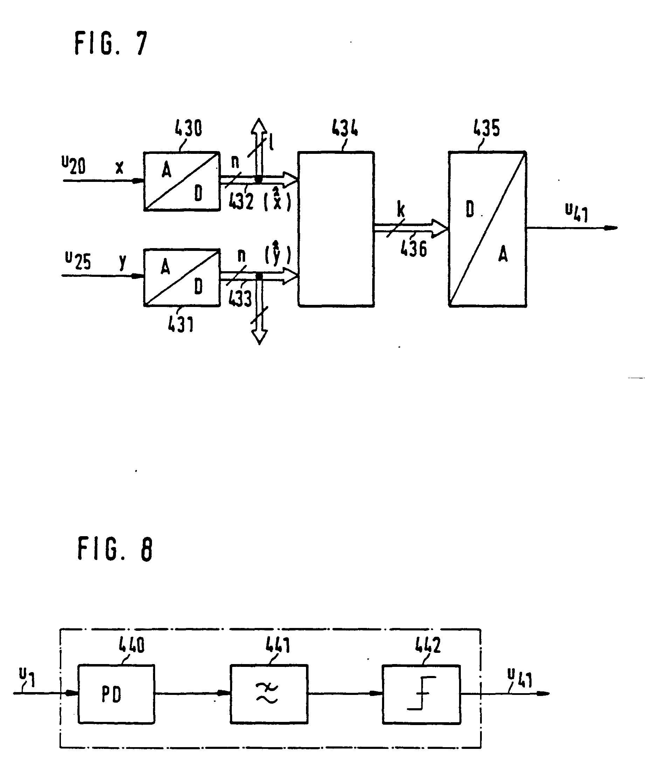

Ein Blockschaltbild zur Durchführung des Verfahrens zeigt Fig. 7. Die kartesisch orientierten Signalkomponenten x und y werden mittels zweier Analog-Digital-Umsetzer 430 und 431 quantisiert und codiert, so daß an den Ausgängen 432 und 433 der Analog-Digital-Umsetzer 430 und 431 n-bit-Worte $\hat{x}$ und $\hat{y}$ vorliegen. Die beiden n-bit-Ausgänge 432 bzw. 433 der Analog-Digital-Umsetzer werden auf eine logische Auswahlschaltung 434 geschaltet. Diese bildet die Zuordnung der verschiedenen Funktionswerte $\varepsilon(\psi, \hat{R})$ zu den Eingangsdaten (x, y) und gibt die Funktionswerte in einer k-bit-codierten Form auf einer k-bit-Leitung 436 aus. Aus der k-bit-Darstellung formt ein Digital-Analog-Umsetzer 435 das zu $\varepsilon(\psi, \hat{R})$ proportionale Signal.

Von besonderem Vorteil bei dieser Realisierung ist, daß nach erfolgter Synchronisation I der n bit auf den Leitungen 432 bzw. 433 bereits die I-bit-codierte Form des demodulierten Signals $\hat{x}$ bzw. $\hat{y}$ darstellen. Eine mögliche Realisierungsform der logischen Auswahlschaltung 434 ist eine Speicher (z.B. RAM, ROM, PROM), welcher zu der aus $\hat{x}$ und $\hat{y}$ gebildeten 2n-bit-Adresse k verschiedene Funktionsbits bildet, welche in ihrer Gesamtheit dem zu jeder Adresse gehörenden Funktionswert von $\varepsilon(\psi, \hat{R})$ entsprechen.

Ein weiterer Vorteil der Schaltung nach Fig. 7 in Kombination mit der Ausführungsform der Auswahlschaltung 434 als Speicher ist, daß die Phasendetektorcharakteristik, die ja durch den Speicherinhalt festgelegt ist, leicht durch Austausch des Speichers oder seines Inhalts abgeändert werden kann.

In der vorhergehenden Beschreibung sind mittlere Phasendetektorcharakteristiken (s. Fig. 3, 6) vorgestellt worden, die frei von Fehlsynchronisationspunkten sind. Solche Charakteristiken können vorteilhaft durch Signumsbildung geformt werden:

$$g(\psi) := sgn(<\varepsilon(\psi, \hat{R})>_{\hat{R}}). \qquad\qquad (25)$$

Eine so geformte Phasendetektorcharakteristik bringt ein besseres Acquisitionsverhalten während des Synchronisationsvorgangs mit sich. Die Bildung der Phasendetektorcharakteristik nach Gleichung (25) wird von einem in Fig. 8 dargestellten Blockschaltbild durchgeführt. In einem Schaltblock 440 werden nach den beschriebenen Verfahren die Einzelphasendetektorfunktionen $\varepsilon(\psi, R)$ ermittelt. Das Ausgangssignal des Schaltblocks 440 wird auf einen Schaltblock 441 zur Mittelwertbildung gegeben. Der Block 441 kann beispielsweise als einfacher Tiefpaß ausgeführt sein. Schließlich wird das Ausgangssignal von Block 441 auf den Eingang eines Begrenzers 442 geschaltet, der die Signums-Funktion nachbildet. Dessen Ausgangssignal $g(\psi) = sgn(<\varepsilon(\psi, \hat{R})>_{\hat{R}})$ kann als Eingangssignal für ein Regelfilter 50 entsprechend Fig. 1 verwendet werden.

**Patentansprüche**

1. Verfahren zum Gewinnen eines Signals, das die Phasendifferenz ($\psi$) zwischen einem lokalen Trägersignal und dem Träger eines amplituden- und/oder phasenumgetasteten Empfangssignals ($\mu_1$) wiedergibt, nach dem das Empfangssignal ($\mu_1$) in zwei von der Phasendifferenz abhängige, in Quadratur zueinander stehende, kartesisch orientierte Signalkomponenten (x, y) zerlegt wird, wobei die beiden Signalkomponenten zusammen mehrere verschiedene Signalzustände darstellen, dadurch gekennzeichnet, daß jedes Paar kartesisch orientierte Signalkomponenten (x, y), welches jeweils einen der möglichen Signalzustände darstellt, in zwei polar orientierte Signalkomponenten (R, α) umgewandelt wird, von denen die eine polare Signalkomponente die Amplitude (R) eines durch die beiden kartesisch orientierten Signalkomponenten (x, y) gebildeten Signalzustandsvektors und die andere polare Signalkomponente den Phasenwinkel (α) zu diesem Signalzustandsvektor darstellt,

daß dann mittels eines ersten Schwellwertentscheiders (412) bestimmt wird, welchem Wert ($\hat{R}$) eines in dem Schwellwertentscheider vorhandenden Wertevorrats, der die von allen erlaubten, unverfälschten Signalzuständen abgeleiteten Amplitudenwerte enthält, die vorher aus dem Empfangssignal ($\mu_1$) ermittelte Amplitude (R) am nächsten kommt,

daß darauf in einem zweiten Schwellwertentscheider (413), der den Wertevorrat der von allen erlaubten, unverfälschten Signalzuständen abgeleiteten Phasenwinkel enthält, derjenige Phasenwinkel (2) ermittelt wird, der von den zu allen Signalzustandsvektoren mit der zuvor entschiedenen Amplitude ($\hat{R}$) gehörenden Phasenwinkel dem aus dem Eingangssignal ($\mu_1$) abgeleiten Phasenwinkel (α) am nächsten kommt und

daß schließlich zwischen diesem durch Schwellwertentscheidung bestimmten Phasenwinkel ($\hat{α}$) und dem aus dem Empfangssignal ($\mu_1$) abgeleiteten Phasenwinkel (α) die Differenz ermittelt wird, welche Differenz proportional der Phasendifferenz ($\psi$) zwischen dem lokalen Trägersignal und dem Träger des amplituden und/oder phasenumgetasteten Empfangssignals ($\mu_1$) ist.

2. Verfahren zum Gewinnen eines Signals, das die Phasendifferenz ($\psi$) zwischen einem lokalen Trägersignal und dem Träger eines amplituden- und/oder phasenumgetasteten Empfangsignals ($\mu_1$) wiedergibt, nach dem das Empfangssignal ($\mu_1$) in zwei von der Phasendifferenz abhängige, in Quadratur zueinander stehende, kartesisch orientierte Signalkomponenten (x, y) zerlegt wird, wobei die beiden Signalkomponenten zusammen mehrere verschiedene Signalzustände darstellen, dadurch gekennzeichnet,

daß die in Quadratur zueinander stehenden, kartesisch orientierten Signalkomponenten (x, y) quantisiert werden, wobei die Anzahl der Quantisierungsstufen für jede Signalkomponente größer ist als die Zahl der für jedes Signalkomponente vorgesehen verschiedenen Werte.

daß jedem Paar kartesisch orientierter quantisierter Signalkomponenten ($\hat{x}$, $\hat{y}$) des Empfangssignals ($\mu_1$) in einer Entscheidungsschaltung ein Ausgangssignal aus einem ersten darin implementierten Wertevorrat zugeordnet wird.

daß die einzelnen Ausgangssignale dies Wertevorrats dadurch gebildet werden,

daß jedes Paar kartesisch orientierter quantisierter Signalkomponenten ($\hat{x}$, $\hat{y}$), welches jeweils einen der möglichen quantisierten Signalzustände darstellt, in zwei polar orientierte Signalkomponenten umgewandelt wird, von denen die eine polare Signalkomponente die Amplitude eines durch die beiden kartesisch orientierten quantisierten Signalkomponenten ($\hat{x}$, $\hat{y}$) gebildeten Signalzustandsvektors und die andere polare Signalkomponente den Phasenwinkel ($\hat{α}$) zu diesem Signalzustandsvektor darstellt.

daß dann bestimmt wird, welchem Wert ($\hat{R}$) eines zweiten Wertevorrats, der die von allen erlaubten, unverfälschten Signalzuständen abgeleiteten Amplitudenwerte enthält, die vorher aus dem Paar quantisierter Signalkomponenten ($\hat{x}$, $\hat{y}$) ermittelte Amplitude am nächsten kommt,

daß darauf durch Vergleich mit den Werten eines dritten Wertevorrats, der die von allen erlaubten, unverfälschten Signalzuständen abgeleiteten Phasenwinkel enthält, derjenige Phasenwinkel (2) ermittelt wird, der von den allen Signalzustandsvektoren mit der zuvor bestimmten Amplitude ($\hat{R}$) gehörenden Phasenwinkeln dem aus dem Paar quantisierter Signalzustände ($\hat{x}$, $\hat{y}$) abgeleiteten Phasenwinkel ($\hat{α}$) am nächsten kommt und

daß schließlich zwischen diesem ermittelten Phasenwinkel ($\hat{α}$) und dem aus dem Paar quantisierter Signalkomponenten ($\hat{x}$, $\hat{y}$) des Eingangssignal ($\mu_1$) abgeleiteten Phasenwinkel ($\hat{α}$) die Differenz ermittelt wird, welche das dem Paar quantisierter Signalkomponenten zugeordnete Ausgangssignal ist.

3. Verfahren nach Anspruch 2, dadurch gekennzeichnet, daß die in Quadratur zueinander stehenden, kartesisch orientierten Signalkomponenten (x, y) parallel in Analog-Digital-Umsetzern (430, 431) quantisiert und codiert werden, daß jeweils aus den zwei zu einem jeden quantisierten Signalzustand gehörenden codierten Signalkomponenten zusammen ein Codewort gebildet wird, das die Adresse in einem Speicher (434) angibt, wo das für den jeweiligen quantisierten Signalzustand der beiden Signalkomponenten ermittelte Differenzsignal codiert abgespeichert ist, und daß das der Adresse zugeordnete codierte Differenzsignal aus dem Speicher (434) herausgelesen und einem Digital-Analog-Umsetzter (435) zugeführt wird.

4. Verfahren nach Anspruch 1 oder 2, dadurch gekennzeichnet, daß aus der Phasenwinkeldifferenz mit Hilfe einer Begrenzerschaltung (423) eine Signumsfunktion gebildet wird.

5. Verfahren nach Anspruch 1 oder 2, dadurch gekennzeichnet, daß die Phasenwinkeldifferenz mit einer Wichtungsfunktion (w) multipliziert wird, die einen um so größeren Wert annimmt, je weniger Signalzustände mit der gleichen Amplitude. vorkommen wie der Signalzustand hat, für den die Phasenwinkeldifferenz ermittelt worden ist.

6. Verfahren nach Anspruch 4, dadurch gekennzeichnet, daß die Signumsfunktion der Phasenwinkeldifferenz mit einer Wichtungsfunktion (w) multipliziert wird, die einen um so größeren Wert

9

annimmt, je weniger Signalzustände mit der gleichen Amplitude vorkommen wie der Signalzustand hat, für den die Phasenwinkeldifferenz ermittelt worden ist.

7. Verfahren nach Anspruch 5 oder 6, dadurch gekennzeichnet, daß die Wichtungsfunktion (w) keine negativen Werte annimmt.

8. Verfahren nach einem der vorhergehenden Ansprüche, gekennzeichnet durch die Anwendung des die Phasendifferenz wiedergebenden Signals als Steuersignal für einen spannungsgesteuerten Oszillator (10) in einer Demodulatorschaltung mit Trägerrückgewinnung von amplituden- und/oder phasenumgetasteten Empfangssignalen ($\mu_1$).

**Revendications**

1. Procédé pour obtenir un signal qui restitue la différence de phase ($\psi$) entre un signal porteur local et la porteuse d'un signal de réception modulé en amplitude et/ou en phase, procédé selon lequel on décompose le signal de réception ($u_1$) en deux composantes, (x, y) du signal, dépendant de la différence de phase, placées en quadrature l'une par rapport à l'autre et définies en coordonnées cartésiennes, étant précisé que les deux composantes du signal représentent ensemble plusieurs états différents du signal, caractérisé par le fait que l'on convertit chaque paire de composantes (x, y) du signal définies en coordonnées cartésiennes, paire que représente respectivement l'un des états possibles du signal, en deux composantes (R, a) du signal définies en coordonnées polaires, dont la première composante polaire du signal représente l'amplitude (R) d'un vecteur d'état du signal formé par les deux composantes (x, y) du signal définies en coordonnées cartésiennes et dont l'autre composante polaire du signal représente l'angle de phase (a) correspondant à ce vecteur d'état du signal;

par le fait que l'on détermine alors, au moyen d'un premier organe de décision à valeur de seuil (412), quelle est la valeur (R̂), d'un stock de valeurs qui se trouve dans l'organe de décision à valeur à seuil et qui contient les valeurs d'amplitude dérivées de tous les états du signal permis, non falsifiés, qui vient tout d'abord au plus près de l'amplitude (R) déterminée à partir du signal de réception ($u_1$);

par le fait qu'ensuite, dans un second organe de décision à valeur de seuil (413), qui contient le stock des valeurs de l'angle de phase dérivé de tous les états du signal permis, non falsifiés, on détermine celui des angles de phase (a) qui, parmi les angles de phase correspondant à tous les vecteurs d'état du signal ayant l'amplitude précédemment décidée (R̂), vient au plus près de l'angle de phase (a) dérivé du signal d'entrée ($u_1$) et

par le fait enfin que l'on détermine la différence entre cet angle de phase (â), déterminé par l'organe de décision à valeur de seuil, et l'angle de phase (a) dérivé du signal de réception ($u_1$), différence qui est proportionnelle à la différence de phase ($\psi$) entre le signal porteur local et la porteuse du signal de réception ($u_1$) modulé en amplitude et/ou en phase.

2. Procédé pour obtenir un signal qui restitue la différence de phase ($\psi$) entre un signal porteur local et la porteuse d'un signal de réception modulé en amplitude et/ou en phase, procédé selon lequel on décompose le signal de réception ($u_1$) en deux composantes (x, y) du signal, dépendant de la différence de phase, placées en quadrature l'une par rapport à l'autre et définies en coordonnées cartésiennes, étant précisé que les deux composantes du signal représentent ensemble plusieurs états différents du signal, caractérisé,

par le fait que l'on quantifie les composantes (x, y) du signal, placées en quadrature l'une par rapport à l'autre, définies en coordonnées cartésiennes, étant précisé que le nombre de échelons de quantification pour chaque composant du signal est supérieur au nombre des valeurs différentes prévues pour chaque composante du signal,

par le fait qu'à chaque paire de composantes (x̂, ŷ) du signal de réception ($u_1$), définies en cordonnées cartésiennes et quantifiées, on fait correspondre, dans un circuit de décision, un signal de sortie pris dans un premier stock de valeurs qui s'y appliquent,

par le fait que les différents signaux de sortie de ce stock de valeurs sont formés par le moyen que l'on convertit chaque paire de composantes (x̂, ŷ) du signal, définiés en coordonnées cartésiennes et quantifiées, paire qui représente respectivement l'un des états quantifiés possibles du signal, en deux composantes du signal définies en coordonnées polaires, dont la première composante polaire du signal représente l'amplitude d'un vecteur d'état du signal formé par les deux composantes (x̂, ŷ) du signal, définies en coordonnées cartésiennes et quantifiées, et dont l'autre composante polaire du signal représente l'angle de phase (â) correspondant à ce vecteur d'état du signal,

par le fait que l'on détermine alors au plus près de quelle valeur (R̂) d'un second stock de valeurs, qui contient les valeurs d'amplitude dérivées de tous les états du signal permis, non falsifiés, vient l'amplitude tout d'abord déterminée à partir de la paire de composantes (x, y) du signal quantifiées,

par le fait qu'ensuite, par comparaison avec les valeurs d'un troisième stock de valeurs, qui contient les angles de phase dérivés de trous les états du signal possibles, non falsifiés, on détermine celui des angles de phase (â) qui, parmi tous les angles de phase correspondants à tous les vecteurs d'état du signal ayant l'amplitude (R) précédemment déterminée, qui vient au plus près de l'angle de phase (â) dérivé de la paire d'état quantifiés (x̂, ŷ) du signal et

par le fait qu'enfin on détermine la différence entre cet angle de phase (â) ainsi déterminé et l'angle de phase (â) dérivé de la paire de composantes quantifiées (x̂, ŷ) du signal d'entree ($u_1$), différence qui est le signal de sortie correspondant à la paire de composantes quantifiées du signal. ·

3. Procédé selon la revendication 2, caractérisé par le fait que l'on quatifie et que l'on code en parallèle, dans des convertisseurs analogiques-numériques (430, 431) les composantes (x, y) du signal placées en quadrature l'une par rapport à l'autre et définies en coordonnées cartésiennes, par le fait que chaque fois, à partir des deux composantes du signal codées appartenant à chacun des étants quantifiés du signal, on forme un mot de code qui indique l'adresse en mémoire (434) où le signal de différence, établi pour l'état, chaque fois quantifié, des deux composantes du signal, est mémorisé sous forme codée, et par le fait que le signal de différence, codé, correspondant à cette adresse, est lu dans la mémoire (434) et amené à un convertisseur numérique-analogique (435).

4. Procédé selon la revendication 1 ou 2, caractérisé par le fait qu'à partir de la différence d'angle de phase et à l'aide d'un circuit limiteur (423), on forme une fonction de signe.

5. Procédé selon la revendication 1 ou 2, caractérisé par le fait que l'on multiplie la différence d'angle de phase par une fonction de pondération (w) qui prend une valeur d'autant plus grande qu'il y a moins d'états du signal ayant la même amplitude que l'état du signal pour lequel la différence d'angle de phase à été déterminée.

6. Procédé selon la revendication 4, caractérisée par le fait que l'on multiplie la fonction de signe de la différence d'angle de phase par une fonction de pondération (w) qui prend une valeur d'autant plus grande qu'il y a moins d'états du signal ayant la même amplitude que l'état du signal pour lequel la différence d'angle de phase a été déterminée.

7. Procédé selon la revendication 5 ou 6, caractérisé par le fait que la fonction de pondération (w) ne prend pas de valeurs négatives.

8. Procédé selon l'une des revendications précédentes, caractérisé par l'application du signal restituant la différence de phase comme signal de commande pour un oscillateur (10) commandé par la tension dans un circuit démodulateur avec récupération de la porteuse de signaux de réception ($u_1$) modulés en amplitude et/ou en phase.

## Claims

1. A method of recovering a signal representing the phase difference ($\psi$) between a local carrier signal and the carrier of an amplitude and/or phase shift keyed received signal ($u_1$), according to which the received signal ($u_1$) is divided into two cartesian oriented signal components (x, y) which are a function of the phase difference and are in a quadrature relationship to one another, with the two signal components together representing a plurality of different signal states, characterized in that

each pair of cartesian oriented signal components (x, y) representing one of the possible signal states is converted into two polar oriented signal components (R, a), with one of said polar signal components representing the amplitude (R) of a signal state vector formed by the two cartesian oriented signal components (x, y) and the other one of said polar signal components representing the phase angle (a) for this signal state vector;

then a deterioration is made by means of a first quantizer (412) as to which value (R) of a store of values available in the quantizer containing the amplitude values derived for all permitted, unfalsified signal states comes closest to the amplitude (R) previously determined from the received signal ($u_1$);

then a determination is made in a second quantizer (413) containing a store of values for the phase angles derived for all permitted, unfalsified signal states as to which one of said phase angles (â) belonging to all signal state vectors at the previously decided amplitude (R̂) comes closest to the phase angle (a) derived from the input signal ($u_1$); and

finally, the difference is determined between this phase angle (â) determined by quantizing the phase angle (a) derived from the received signal ($u_1$), said difference being proportional to the phase difference ($\psi$) between the local carrier signal and the carrier of the amplitude and/or phase shift keyed received signal ($u_1$).

2. A method of recovering a signal representing the phase difference ($\psi$) between a local carrier signal and the carrier of an amplitude and/or phase shift keyed received signal ($u_1$), according to which the received signal ($u_1$) is divided into two cartesian oriented signal components (x, y) which are a function of the phase difference and are in a quadrature relationship to one another, with the two signal components together representing a plurality of different signal states, characterized in that

the quadrature related, cartesian oriented signal components (x, y) are quantized, with the number of quantizing steps for each signal component being greater than the number of different values provided for each signal components;

each pair of cartesian oriented quantized signal components (x̂, ŷ) of the received signal ($u_1$) is associated in a decision circuit with an output signal from a first store of values implemented therein;

the individual output signals of this store of values are formed in that:

each pair of cartesian oriented quantized signal components (x̂, ŷ), each representing one of the possible quantized signal states, is converted into two polar oriented signal components, one of said polar signal components representing the amplitude of a signal state vector formed by the two cartesian oriented, quantized signal components (x̂, ŷ) and the other one of said polar signal components representing the phase angle (â) for this signal state vector;

a determination is then made as to which value ($\hat{R}$) of a second store of values containing the amplitude values derived from all permitted, unfalsified signal states comes closest to the amplitude previously determined from the pair of quantized signal components ($\hat{x}$, $\hat{y}$);

a comparison is then made with the values of a third store of values containing the phase angles derived from all permitted, unfalsified signal states, to find that phase angle ($\hat{a}$) of all phase angles belonging to all signal state vectors having the previously determined amplitude ($\hat{R}$) which comes closes to the phase angle ($\hat{a}$) derived from the pair of quantized signal states ($\hat{x}$, $\hat{y}$); and

finally the difference is formed between this determined phase angle ($\hat{a}$) and the phase angle ($\hat{a}$) derived from the pair of quantized signal components ($\hat{x}$, $\hat{y}$) of the input signal ($u_1$) and said difference is the output signal associated with the pair of quantized signal components.

3. A method according to claim 2, characterized in that the quadrature related, cartesian oriented signal components (x, y) are quantized and coded in parallel in analog/digital converters (430, 431); a code word is formed of each pair of coded signal components belonging to each quantized signal state, said code word indicating the address in a memory (434) in which the difference signal determined for the respective quantized signal state of the two signal components is stored in coded form, and the coded difference signal associated with the address is read out of said memory (434) and fed to a digital/analog converter (435).

4. A method according to claim 1 or 2, characterized in that a signum function is formed from the phase angle difference with the aid of a limiter circuit (423).

5. A method according to claim 1 or 2, characterized in that the phase angle difference is multiplied by a weighting function (w) which takes on a greater value, the fewer signal states appear that have the same amplitude as the signal state for which the phase angle difference has been determined.

6. A method according to claim 4, characterized in that the signum function of the phase angle difference is multiplied by a weighting function (2) which takes on a greater value, the fewer signal states appear that have the same amplitude as the signal state for which the phase angle difference has been determined.

7. A method according to claim 5 or 6, characterized in that the weighting function (w) does not take on negative values.

8. A method according to any one of the preceding claims, characterized in that the signal representing the phase difference is utilized as a control signal for a voltage controlled oscillator (10) in a demodulator circuit operating with carrier recovery of amplitude and/or phase shift keyed received signals ($u_1$).

# FIG. 1

EP 0 249 045 B1

FIG. 2

FIG. 4

FIG. 3

FIG. 5

FIG. 6

EP 0 249 045 B1

## FIG. 7

## FIG. 8